# EUROPEAN PATENT APPLICATION

(11) **EP 4 606 542 A1**
(43) Date of publication of application: **27.08.2025**
(21) Application number: 25159510.4
(22) Date of filing: 21.02.2025
(51) Int. Cl.: B26D 7/08

(54) **METHOD OF FORMING AN ELASTOMERIC FOAM ELEMENT**

(30) Priority: 21.02.2024 NL 2037079
(71) Applicant: R. Van Den Hanenberg B.V., 5145 PC Waalwijk (NL)
(72) Inventor: Van den Hanenberg, Ronnie Augustinus Johannes Adrianus, 5145PC Waalwijk (NL)
(74) Representative: Patent Business B.V.

(57) **Abstract**

The present invention relates to a method of forming an elastomeric foam element. The present invention further relates to an elastomeric foam element obtained by the method, to an assembly for forming the elastomeric foam element, to use of the method, and to a computer program comprising instructions to form the elastomeric foam element.

## Description

### FIELD OF THE INVENTION

The present invention relates to a method of forming an elastomeric element. The present invention further relates to an elastomeric element obtained by the method, to an assembly for forming the elastomeric element, to use of the method, and to a computer program comprising instructions to form the elastomeric element.

### BACKGROUND OF THE INVENTION

Insulation in air conditioning, cool installations, process installation, and heating installation has become more important over the years.

In this respect, thermal insulation relates to a reduction of heat transfer between objects in thermal contact or in range of radiation influence, such as tubing in a maintenance room. Thermal insulation can be achieved with suitable object shapes and materials. The heat transfer (flow) is considered as an inevitable consequence of contact between objects of differing temperature. In order to reduce heat flow, and thus maintaining an object substantially at a same temperature, a thermal insulation is provided. The thermal insulation has a reduced thermal conduction or likewise an insulating action. A thermal conductivity (k) is used to quantify insulating properties. Therein a low thermal conductivity value indicates a high insulating capability (R-value). Other important properties of insulating materials are product density (ρ) and specific heat capacity (c). It is noted that cooling requires much more energy than heating; so, maintaining a low temperature is in view of energy consumption quite important.

Heating and cooling systems are sources of heat. They distribute heat through buildings, typically by means of pipe or ductwork. In order to reduce energy consumption insulating these pipes using pipe insulation in unoccupied rooms is required. It further prevents condensation occurring on cold and chilled pipework. Preventing the formation of condensation on pipework is important as moisture contributes to corrosion.

Likewise, chemicals, water, air, electrical cables, can run through pipe work.

An example of a document relating to isolation is US 2007/0131300 which recites a pipe insulating fitting cover for insulating a pipe joint, the cover having a first insulating cover for insulating the body of the pipe joint and a second insulating cover for enclosing and insulating the bonnet of the pipe joint. The application recites use of an abrasion apparatus. As a result, thereof parts of said cover are abraded to obtain a specific shape. Such abrasion requires a rigid insulation material and a substantial chance of burr formation at the edge of abraded regions. In addition, no good insulation is obtained at the edges. It is noted that a curvature of the abrasion apparatus limits the application to specific pipe diameters. Shaping an insulation cover using an abrasive would result in burr formation and an uneven sealing of both the insulation cover itself and the to-be-covered material. The covers used are curved.

For (somewhat) complex piping insulation typically flexible elastomeric foams are used. These foams relate to flexible and closed-cell structures. Examples are rubber foams based on NBR or EPDM rubber. Flexible elastomeric foams exhibit such a high resistance to the passage of water vapor that they do not generally require additional water-vapor barriers. Such high vapor resistance, combined with the high surface emissivity of rubber, allows flexible elastomeric foams to prevent surface condensation formation with comparatively small thicknesses.

As a result, flexible elastomeric foams are widely used on refrigeration and air-conditioning pipework. Flexible elastomeric foams are also used on heating and hot-water systems. However, these flexible foams still have to be applied on the structures. Such includes cutting and gluing of parts. If long stretched piping is involved, such cutting and gluing is relatively simple. It is especially relevant that insulation pieces and parts fit well together in order to prevent condensation, mold growth, microbial growth, and corrosion. For durability, fire safety, noise reduction and appearance it is important that no burrs are present. Cutting should be performed with relatively high precision and without forming burrs.

For complex structures however, such as pipe-couplings, passages through walls and floors, bends, bifurcations, sensors, controllers, closures, vents, locking wheels, supports, suspensions, flanges, branches, T-junctions, and butterfly valves, a time consuming process and specialized craftsmanship are required. Despite that many tasks in nowadays society may be highly automated or machine supported, insulation still largely relates to applying pieces of insulation material by hand. Such is especially the case for large ductworks, having external diameters ranging from 15 mm - 2 m (similar to DN15 to DN2000, such as DN20, DN50, DN80, DN100, DN200, DN250, etc.), typically being used for transport of fluids, like hot and cold water, and gases, like nitrogen and air. Modern ductwork may involve multitudes of 100-10.000 meters or more for a building or building complex. For understanding in a typical day 2000 m of ductwork may be isolated, whereas such an isolation may continue for months. The ductwork is typically formed from a metal, such as stainless steel, aluminum, or from plastics. The said hand-held devices may be motorized devices, but the process will still require much time and specialized craftmanship. Known methods are sometimes additionally used to assist such hand cutting, for example in assisting cutting of straight lines. There is however a need for a more efficient way of forming elastomeric elements with a 2-dimensional shape.

Incidentally reference can be made to EP 1 123 197 B1, US 2006/196332 A1, and US 5,061,331 A. EP 1 123 197 B1 recites a method and apparatus for cutting segments from a long sheet of multilayered elastomeric material. An initial opening is formed in the sheet without severing reinforcing cords within the elastomeric sheet by a penetrator/separator. Two ultrasonic knives are inserted on either side of the penetrator/separator and positioned to cut the sheet at a small skive angle alpha with respect to the plane of the sheet being cut. Then the knives are moved to opposite edges of the sheet of elastomeric material. US 2006/196332 A1 recites a method and apparatus for cutting an elastomeric laminate that may include a layer of reinforcement cords, into a desired length without cutting through the cords. The method includes the step of cutting through the gum portion of the elastomeric composite material at a desired skive angle, and then opening up the skived cut. Next, the cord reinforcement layer is cut without severing the reinforcement cords. An elastomeric composite strip cut to the desired length is produced and has cut ends. One of the cut ends has the gum portion cut at a desired skive angle adjacent an overhang portion of the reinforcement layer. The opposite end of the elastomeric composite segment also has a skived portion to mate with the skived portion of the first cut end, and a gap in the cord ply to mate with the cord overhang of the first end, resulting in a splice. An improved anvil having independently controlled vacuum zones and adjustable width vacuum zones is also provided, as well as improved cutting mechanisms. US 5,061,331 A recites an apparatus for cutting and sealing the cut edges of semipermeable and at least partially thermoplastic fabric material is disclosed as having a support to position the material for cutting and sealing, a vacuum system to secure the material to the support to immobilize the material while the latter is being cut and sealed, an ultrasonic cutter to cut the material and to seal cut edges to prevent ravelling thereof, and a guide to direct the cutter to cut the material in a desired configuration. The apparatus may be particularly adapted to cut and seal cut edges of automotive safety air bag material.

The present invention therefore relates to a method of forming an elastomeric element, which overcomes one or more of the above disadvantages, without compromising functionality and performance.

### SUMMARY OF THE INVENTION

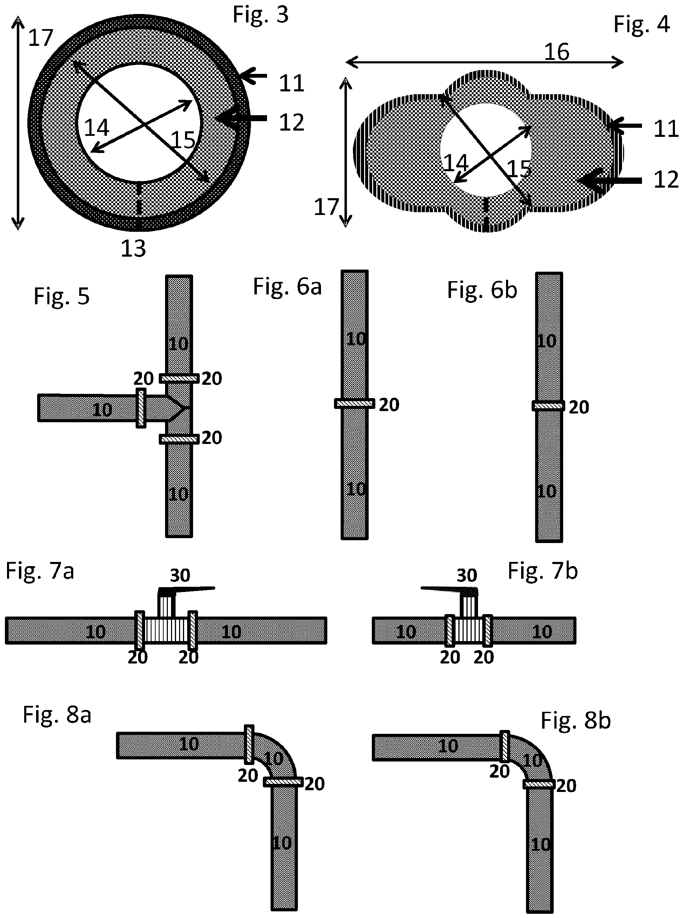

The present invention relates in a first aspect to a method of forming an elastomeric foam element having a thickness and a pre-designed 2-dimensional shape, for thermal insulation on a 3-dimensional structure, the method comprising
- providing a flat panel (3) of elastomeric material with a flat panel thickness (t) on a support (2), wherein the flat panel width (w) and the flat panel length (1) are both at least as large as the 2-dimensional shape width and the 2-dimensional shape length, respectively, wherein the support is configured to stabilize the flat panel of elastomeric material during cutting, and preferably to fix the flat panel in place,
- forming the elastomeric element out of the flat panel of elastomeric material, wherein forming is by a cutter, wherein the cutter is selected from an ultrasonic cutter and an oscillating tangential cutter, in particular wherein the cutter comprises a blade, and
- therewith obtaining the elastomeric element having the pre-designed 2 dimensional shape, in particular wherein the forming by the cutter is a robot-controlled cutter (4), wherein cutting is at a predetermined position on the flat panel and under a predetermined angle of the cutter. With the oscillating tangential cutter higher precision and control over the cutting process due to the oscillating blade is achieved, as well as better material preservation and less distortion compared to ultrasonic cutting, a wider application range thanks to improved adaptability to various elastomer materials, and an increased flexibility in cutting angles up to 75°, improving accuracy of complex cuts. In addition, we have integrated the role of a cobot (collaborative robot) into our process, enabling automated material positioning and real-time feedback. The flat paned therefore has a thickness, a width, and a length, defining the tree dimensions of the flat panel. Preferably the forming is performed at a constant angle with respect to the elastomeric element. In particular, the angle is selected from perpendicular, 85-95°, 40-50°, 25-35° and 55-65°, such as 90°, 60°, 45° and 30°. In other words, a selection can be made between a substantially perpendicular cut, and cuts under specific angles. In the context of the present invention, such an elastomeric element having a 2-mensional shape, refers to an element which substantially has a two dimensional shape or form, such as a square or rectangular form, circle section ellipsoid section, a shape according to figures 3 or 4, etc. The element clearly has the thickness of the insulation material. The one or more 2-dimensional elements together are intended to form a closed structure around the pipe work, or part thereof. As such the elements need to fit perfectly with respect to one and another. The present method is typically performed in a batch-wise mode, that is, one or more 2-dimensional elements are formed out of a flat panel of elastomeric material, and typically as many 2-dimensional elements are formed as are obtainable from the flat panel; thereafter, a next flat panel is provided. The present elastomeric element typically is a foam, wherein the foam has a density of 50-100 kg/m³, such as 60-90 kg/m³ (ISO 845), and/or a Youngs modulus of 0.001-1 GPa, such as 0.005-0.1 GPa, in particular 0.001-0.01 GPa (ISO 6721-1:2019 EN), and/or a compression at 25% deflection of > 10 kPa (ISO 6916-1), and/or providing thermal insulation λ<0.1 W/(m*K), such as λ<0.05 W/(m*K)(EN ISO 13787), and/or with a closed cell content of >90%, typically > 95% (water absorption test). The present foam may comprise open cells, and closed cells, typically wherein the majority of cells is of closed cell type. The term "flexible" relates to a capacity of a material to bend easily, without breaking. An elastomer is typically a polymer with viscoelasticity (i.e. both viscosity and elasticity) and with weak intermolecular forces, generally low Young's modulus (E) and high failure strain compared with other materials. The term ultrasonic cutting as used herein refers to cutting with a cutter which comprises an ultrasonic blade, typically operating at a frequency of > 20 kHz, or with an oscillating tangential cutter, typically operating at a frequency of 10-100 Hz, such as 50-75 Hz. The blade typically relate to a so-called tangential blade; the blade can be oriented in a desired angle of cutting; the blade can also be limited in cutting depth, such that only the flat panel is cut, and such that the flat panel is fully cut. The cutting depth and/or angle of cutting can be adapted, such as during cutting, or before cutting. Such blades differ from regular blades as ultrasonic blades use ultrasonic energy to generate the cuts, when the ultrasonic cutter is placed on and in the elastomeric element. The cuts are generated by microscopic vibrations, which may also be referred to as "oscillations", of the blade which are caused by an electric pulse. Such oscillations occur at frequencies in the order of > 20 kHz, hence "ultrasonic", such as 30-100 kHz. Therewith precise cutting, without ravelling or the like, without deformations due to cutting, and without mechanical impairment or load, is obtained. The microscopic vibrations create a force which is highly powerful, allowing to generate cuts with great precision and with relatively very little pressure force. A precision of better than 1 mm is typically achieved, typically over the full cut, and precisions of 50-200 µm are achievable. In addition, said precision is maintained from the first present elastomeric element to the next such element. That is, human variation from operator to operator as well as from the first present elastomeric element to the next such element is largely excluded. Ultrasonic cutting thus differs from other types of cutting such as laser cutting. With laser cutting material will melt which molten material is removed from the material.

In a second aspect, the present invention relates to a multitude of elastomeric foam elements having a pre-designed 2-dimensional shape, for thermal insulation on a 3-dimensional structure, obtainable by the method as taught herein, wherein said multitude of elastomeric foam elements is for thermal insulation on said 3-dimensional structure, in particular of a multitude of 3-dimensional sub-structures, and wherein for each to be-insulated sub-structure at least one pre-designed 2 dimensional shape for insulating said sub-structure is provided.

In a third aspect, the present invention relates to an assembly (1) for forming an elastomeric foam element having a pre-designed 2-dimensional shape, for thermal insulation on a 3-dimensional structure, the assembly comprising a support (2) for receiving a flat panel of elastomeric material, wherein the support is configured to stabilize the flat panel of elastomeric material during cutting, and preferably to fix the flat panel in place, wherein the support further comprises at least one air permeable mat configured for receiving part of the tip of the cutter, when a stroke of tip when cutting exceeds the thickness of the flat panel, in particular wherein the support is divided into support sections (C), and a robot-controlled cutter (4), configured to cut a 2-dimentsional shape out of the flat panel of elastomeric material, at a predetermined position and at a predetermined angle, wherein the predetermined angle of the cutter is adjustable before and during cutting, in particular wherein the robot-controlled cutter is selected from a cutter comprising an adjustable robot arm with a cutter, from a robot arm with an adjustable cutter, and from a combination thereof. Preferably the forming is performed at a constant angle with respect to the elastomeric element. In particular, the angle is selected from perpendicular, 85-95°, 40-50°, 25-35° and 55-65°.

In a further aspect, the present invention relates to a use of the method as taught herein in thermal insulation of a 3-dimensional structure.

In a further aspect, the present invention relates to a computer program, when loaded and executed on a computer, comprising instructions to form an elastomeric foam element having a thickness and a pre-designed 2-dimensional shape, for thermal insulation on a 3-dimensional structure, comprising
- providing a flat panel of elastomeric material with a flat panel thickness on a support, wherein the flat panel width and the flat panel length are both at least as large as the 2-dimensional shape width and the 2-dimensional shape length, respectively,
- forming the elastomeric element out of the flat panel of elastomeric material, carried out by a, and
- therewith obtaining the elastomeric element having the pre-designed 2 dimensional shape, wherein the forming by the cutter is performed by a robot-controlled cutter, at a predetermined position and at a predetermined angle, in particular providing instruction to adjust the predetermined angle of the cutter before and during cutting. Preferably the forming is performed at a constant angle with respect to the elastomeric element. In particular, the angle is selected from perpendicular, 85-95°, 40-50°, 25-35° and 55-65°.

Methods of the present invention overcome disadvantages of the prior art. The amount of time required for forming the elastomeric elements as taught herein is significantly reduced. Not only the process of forming itself is significantly faster by the robot-controlled performance of forming the elements, but also the execution of the forming process by a computer program comprising instructions to form the elastomeric element with a pre-designed 2-dimensional shape, for thermal insulation on a 3-dimensional structure, makes that the process flow as a whole can happen in a much more efficient way. Complex structures, such as pipe-couplings, passages through walls and floors, bends, bifurcations, sensors, controllers, closures, vents, locking wheels, sup-ports, suspensions, flanges, branches, T-junctions, and butterfly valves, can be produced with the methods as taught herein in a process flow which is less time-consuming and thus in a much more efficient way of forming the said elastomeric elements with a 2-dimensional shape. Also precision is increased, a quality of the formed elements is increased, an amount of waste is reduced, project planning and installation are optimized, versatility is increased, and above all the quality of the insulated 3-d structure is improved.

The present invention provides a solution to one or more of the above mentioned problems and overcomes drawbacks of the prior art.

### DETAILED DESCRIPTION OF THE INVENTION

In an exemplary embodiment of the present method, the flat panel of elastomeric material has a thickness of 0.5 - 5 cm, such as 1.0 cm, 1.3 cm, 1.6 cm, 1.9 cm, 2.5 cm, 3.2 cm or 5.0 cm. The elastomeric material, in particular for thermal insulation, may have an adhesive layer. The thickness of the material is selected in view of insulation properties and temperature gradient between liquid (gas/fluid) in e.g. ductwork and outside temperature.

In an exemplary embodiment, the method as taught herein initially comprises obtaining the 2-dimensional shape and thickness of the elastomeric element, in particular by at least one of designing of the 2-dimensional shape, and obtaining a representation of the 2-dimensional shape, in view of the 3-dimensionale structure, more in particular a digital representation, and providing instructions to the robot-controlled ultrasonic cutter to form the elastomeric element by ultrasonic cutting.

In an exemplary embodiment of the present method, the support is configured to stabilize the flat panel of elastomeric material during ultrasonic cutting, and preferably to fix the flat panel in place, wherein the support further comprises at least one air permeable mat configured for receiving part of the tip of the cutter, when a stroke of tip when cutting exceeds the thickness of the flat panel, and/or wherein the support is divided into support sections (C). A mat is considered to relate to a piece of coarse material, usually woven, felted, plated or non-woven material, placed on the support for covering and protecting the support, e.g. 0.5-2 cm thick.

In an exemplary embodiment of the present method, the support comprises a bottom element (5), and one or more spacer elements (6) attached to one side of the bottom element, for supporting the flat panel (3) of elastomeric material, the one or more spacer elements thereby forming an open space (s) between the bottom element and the flat panel of elastomeric material, and one or more wall elements (7) attached to the bottom element, the one or more wall elements enclosing the open space between the bottom element and the flat panel of elastomeric material and the one or more spacer elements, wherein the bottom element, the one or more wall elements and the flat panel of elastomeric material form a closed container (8), enclosing the open space and the spacer elements within the open space, and wherein the flat panel of elastomeric material has the same surface size as the surface enclosed by the inner side of the one or more wall elements, and/or wherein a suction force (f) is applied to the inside of the container, by providing an under pressure to the flat panel, such as an under pressure of 1-1000 Pa, in particular 10-100 Pa, thereby pulling the flat panel against the one or more spacer elements, and obtaining a stabilized configuration of the flat panel of elastomeric material during cutting. The term 'suction force' as used herein refers to a force which can be exerted by a system, apparatus or any measure which is able to exert such suction force, in particular by air suction, into the open space (s), in order to allow the flat panel to be pulled against the one or more spacer elements. Such system or apparatus can be an extraction system, an extraction motor, a suction motor, or a compressor, and the like.

In an exemplary embodiment of the present method, the forming is performed by at least one of a constant angle of the cutter with respect to the elastomeric element, and a variable angle with respect to the elastomeric element.

In an exemplary embodiment of the present method, the angle is selected from perpendicular, 85-95°, 40-50°, 25-35° and 55-65°, with respect to a surface of the flat panel

In an exemplary embodiment of the present method the angle of the cutter is varied by rotating the cutter to the according angle, and/or wherein the angle of the cutter is varied by rotating the robot to the according angle,
in particular wherein the angle of the cutter is dynamically adjusted during cutting in view of the pre-designed 2-dimensional shape with the panel thickness.

In an exemplary embodiment, the present method further comprises
- obtaining a digital representation of the 3-dimensional structure to be insulated, the 3-dimensional structure comprising at least two individual tube sections and an outward extending connecting section, wherein the 3-dimensional structure in particular comprises elements of ductwork and piping, such as pipe-couplings, passages through walls and floors, bends, bifurcations, sensors, T-junctions, controllers, closures, vents, locking wheels, supports, suspensions, (butterfly)valves, flanges and branches, and in particular wherein the outward extending connecting section is selected from at least one of a sensor, a controller, and a closure,
- dividing the 3-dimensional structure into a multitude of 3-dimensional sub-structures,
- identifying to be-insulated sub-structures and sub-structures that need no insulation, and,
- for each to be-insulated sub-structure providing at least one pre-designed 2 dimensional shape for insulating said sub-structure.

In an exemplary embodiment, the present method further comprises providing each of the multitude of 3-dimensional sub-structures with a unique sub-structure identifier, in particular each of the to-be-insulated sub-structures, and providing each of the pre-designed 2-dimensional shape for insulating said sub-structure with a unique 2-dimensional shape identifier, in particular a with the unique sub-structure identifier corresponding unique 2-dimensional shape identifier.

In an exemplary embodiment, the present method further comprises providing the at least one pre-designed 2-dimensional shape for each to be-insulated sub-structure to the controller, and instructing the robot-controlled cutter to cut said at least one pre-designed 2-dimensional shape, in particular wherein a remainder of the flat panel after providing the at least one pre-designed 2-dimensional shape for each of the multitude of 3-dimensional sub-structures to be-insulated is minimized, more in particular minimized for all flat panels to be used for providing the multitude of 3-dimensional sub-structures.

In an exemplary embodiment, the present method further comprises sorting said at least one pre-designed 2-dimensional shape per sub-structure.

In an exemplary embodiment, the present method further comprises applying the at least one pre-designed 2-dimensional shape per sub-structure to said sub-structure, in particular by an adhesive.

In an exemplary embodiment, the present method further comprises Positioning the flat panel on the support, and/or Aligning the flat panel on the support, in particular aligning the flat panel in view of at least one corner of the support and/or at least one side of the support, therewith providing an aligned coordination system of the flat panel with respect to the position of the support.

In an exemplary embodiment, the present method further comprises Selecting a cutter with a cutting length substantially similar to a thickness of the flat panel,
Adjusting a height of the cutter with respect to the support such that a cutting depth of the cutter does not exceed the thickness of the flat panel.

In an exemplary embodiment of the elastomeric element, the elastomeric material is a foam, in particular a foam comprising flexible and closed-cell structures, such as rubber foams based on NBR or EPDM rubber.

In an exemplary embodiment the elastomeric element has an inbuilt water vapor barrier.

In an exemplary embodiment the elastomeric element is a dust and fiber free material.

In an exemplary embodiment the elastomeric element has a closed cell structure, in particular an interconnected closed cell structure. As such water ingress is limited. The material may vary somewhat in characteristics, e.g. when applied to hot or cold pipe work.

In an exemplary embodiment of the assembly as taught herein, the support comprises a bottom element (5), and one or more spacer elements (6) attached to one side of the bottom element, for supporting the flat panel (3) of elastomeric material, the one or more spacer elements thereby forming an open space (s) between the bottom element and the flat panel of elastomeric material, and one or more wall elements (7) attached to the bottom element, the one or more wall elements enclosing the open space between the bottom element and the flat panel of elastomeric material and the one or more spacer elements, wherein the bottom element, the one or more wall elements and the flat panel of elastomeric material form a closed container (8), enclosing the open space and the spacer elements within the open space, and wherein the flat panel of elastomeric material has the same surface size as the surface enclosed by the inner side of the one or more wall elements, and wherein a suction force (f) is applied to the inside of the container, thereby pulling the flat panel against the one or more spacer elements, and obtaining a stabilized configuration of the flat panel of elastomeric material during cutting, wherein a suction force (f) is applied, by providing an under pressure to the flat panel, such as an under pressure of 1-1000 Pa, in particular 10-100 Pa thereby pulling the flat panel against the one or more spacer elements, and obtaining a stabilized configuration of the flat panel of elastomeric material during cutting.

In an exemplary embodiment of the assembly, the assembly further comprises a digital operating system (9), for digital processing of designing the 2-dimensional shape of the elastomeric element, and for instructing the robot-controlled cutter (4), and for forming the elastomeric element.

In an exemplary embodiment of the computer program as taught herein, the computer program further comprises a multitude of representations of 2-dimensional shapes, wherein said multitude of representations is projected on a series of flat panels such that a remainder of flat panel material of said flat panels is minimized.

The invention is further detailed by the accompanying figures, which are exemplary and explanatory of nature and are not limiting the scope of the invention. To the person skilled in the art it may be clear that many variants, being obvious or not, may be conceivable falling within the scope of protection, defined by the present claims.

### FIGURES

Embodiments of the invention will now be described, by way of example only, with reference to the accompanying schematic figures in which corresponding reference symbols indicate corresponding parts.
Figure 1 shows a schematic representations of an embodiment of the assembly of the present invention.
Figure 2a-2d schematically show cross sections of the support, which is able to support a flat panel of elastomeric material.

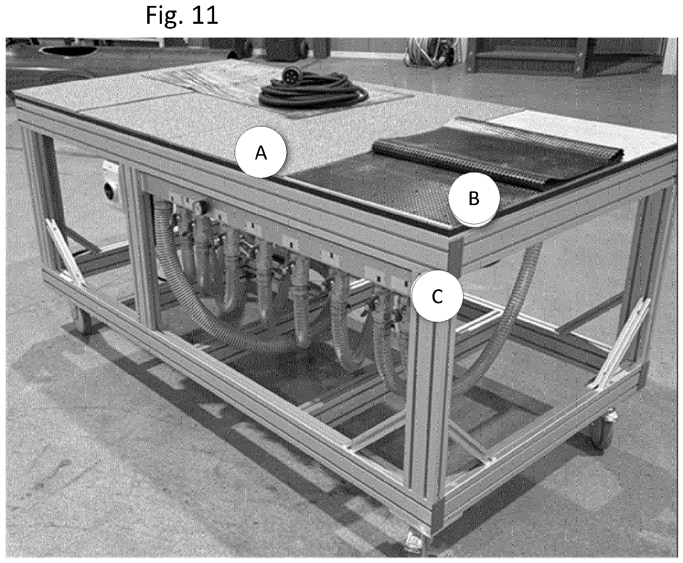

Figures 3-10 show examples of elastomeric elements and how they are applied to ductwork sections and coupling elements. Figures 3 and 4 show cross sections of a coupling structure. Figures 5-8 show typical ductwork sections. Figure 9 shows an insulation element for a coupling element. Figure 8 shows an example of an insulated tube section comprising a coupling element. Figure 11 shows an exemplary assembly.

### DETAILED DESCRIPTION OF FIGURES

In the figures:
- 1: Assembly for forming an elastomeric element
- 2: Support for receiving a flat panel of elastomeric material
- 3: Flat panel of elastomeric material
- 4: Robot-controlled ultrasonic-cutter
- 5: Bottom element
- 6: Spacer element
- 7: Wall element
- 8: Container
- 9: Digital operating system
- 10: Tube section
- 11: Vertical flat element
- 12: Horizontal flat element
- 13: Incision (optional)
- 14: Inner diameter
- 15: Outer diameter
- 16: Broadened horizontal section
- 17: Less broadened vertical section
- 20: Coupling element
- 30: Butterfly valve
- A: air permeable mat
- B: vacuum table
- C: vacuum table zone
- f: Suction force
- t: Flat panel thickness
- w: Flat panel width
- 1: Flat panel length
- c: Cross section
- s: Open space

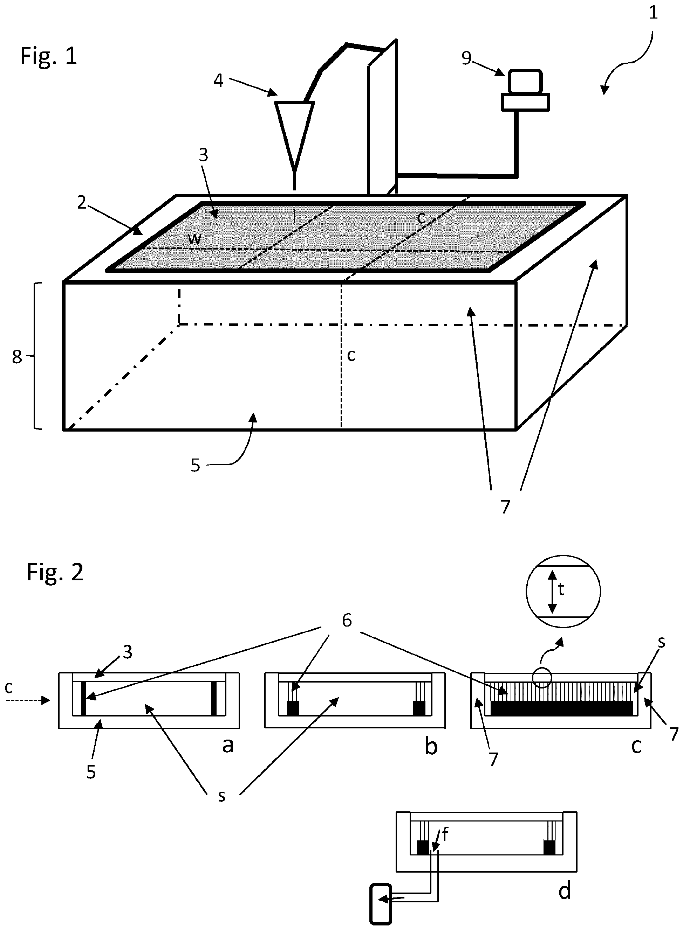

Figure 1 shows a schematic representations of an embodiment of the assembly of the present invention. An assembly 1 is shown for forming an elastomeric element having a pre-designed 2-dimensional shape, for thermal insulation on a 3-dimensional structure. The assembly of this embodiment shows a support 2 for receiving a flat panel 3 of elastomeric material, and a robot-controlled ultrasonic cutter 4. The support 2, the flat panel 3 and the robot-controlled ultrasonic cutter 4 are configured to cut a 2-dimentsional shape out of the flat panel of elastomeric material. In this configuration the 2-dimensional shape can be cut at a predetermined position and at a predetermined angle. This embodiment of the present invention shows a support 2 which comprises a bottom element 5 and one or more spacer elements 6 (fig. 2), for supporting the flat panel of elastomeric material 3. The support 2 further shows four wall elements 7, attached to the bottom element 5. The bottom element 5, the wall elements 7 and the flat panel of elastomeric material 3 together form a closed container 8. The said container encloses an open space s and one or more spacer elements 6 within the open space as shown in exemplary embodiments of fig. 2. In the embodiment of figure 1, the flat panel 3 of elastomeric material has the same surface size as the surface enclosed by the inner side of the one or more wall elements. The flat panel 3 of elastomeric material has a panel thickness t, a flat panel width w, and a flat panel length 1. In an embodiment, the upper side of side walls 7 and the upper side of flat panel 3 form a line which is substantially straight, such as a straight horizontal line. The assembly of this embodiment further comprises a digital operating system 9, for digital processing of designing the 2-dimensional shape of the elastomeric element, and for instructing the robot-controlled ultrasonic cutter 4, and for forming the elastomeric element. The digital operating system 9 is electrically connected to the ultrasonic cutter 4, such as an electricity wire or a suitable wireless connection able to send information for digital processing and instructions to the robot-controlled ultrasonic cutter and forming the elastomeric element.

Figure 2a-2d schematically show cross sections of the support, which is able to support a flat panel of elastomeric material. Through cross section line c of figure 1, the cross section provides a side view of the supporting container 8 of the assembly 1. This embodiment of the present invention shows a support 2 which comprises a bottom element 5 and one or more spacer elements 6, for supporting the flat panel of elastomeric material 3. The one or more spacer elements generate an open space s between the bottom element and the flat panel of elastomeric material. Different embodiments of spacer elements are shown in figure 2 a, b and c. As shown herein, the type, structure and number of spacer elements can vary as will be understood by the skilled person. As shown in the embodiment of figure 2 a, each spacer element can comprise one material, such as a solid material, able to carry flat panel 3 and able to keep space s an open space. As shown in the embodiment of figure 2 b, each spacer element can comprise more than one material, such as at least two different materials, configured to carry flat panel 3 and able to keep space s an open space. Each spacer element may in that case comprise a base element, and a stiff element with an open structure, such as a brush or brush-like structure or a bristle, able to carry flat panel 3 and able to keep space s an open space. The embodiment shown in figure 2 c shows a variation, wherein spacer elements as shown in figure 2 b are extended over the surface of the flat panel 3. In an embodiment the spacer elements are extended over a substantial par of the full surface of the flat panel 3, in particular extended over the full surface of the flat panel 3. In an embodiment the spacer elements form one spacer element 6 able to carry flat panel 3 and able to keep space s an open space. The support 2 further shows wall elements 7 attached to the bottom element 5. As such, the wall elements 7 enclose the open space s between the bottom element 5 and the flat panel 3 of elastomeric material and enclosing the one or more spacer elements 6 within the open space. In such embodiment, the bottom element 5, the wall elements 7 and the flat panel 3 of elastomeric material form a closed container 8. The flat panel 3 has the same surface size as the surface enclosed by the inner side of the wall elements. In such embodiment the flat panel 3 forms a lid of the container 8. Obviously this may be varied dependent on the particular needs when in operation, or on the availability of particular flat panel sizes. In an embodiment the flat panel 3 has a surface size which is smaller than the surface enclosed by the inner side of the wall elements 7. In such embodiment the remaining surface is covered with a second material in order to provide overall a panel covering the space s and forming a closed container 8. Figure 2 d shows that in an embodiment the assembly 1 can further comprise application of a suction force f to the inside of the container 8. The suction force f is able to pull the flat panel against the one or more spacer elements, into the direction of the bottom element 5. Application of the suction force thereby obtains a stabilized configuration of the flat panel of elastomeric material when ultrasonic cutting of the flat panel is carried out during operation of the assembly 1.

In figure 3 a cross section of a coupling element is shown. Therein a first flat (horizontal) element 12, positioned on top (or likewise on the bottom) of a 3-dimensional coupling element, is adhered to a vertical flat element 11, forming (part of the) side insulation of the coupling element. Further an incision 13 is provided. In an embodiment the present 3-dimensional element is for insulating a coupling element between a first tube and a second tube, optionally comprising one or more incisions (13) for attaching the 3-dimensional element to the coupling element. As such the 3-dimensinal element can be pre-fabricated, e.g. in a first location, and be applied directly to a coupling element, e.g. in a second location. Upon application an adhesive is preferably applied to the one or more incisions (13), in order to fully close the insulation. The insulation can be made of Armaflex^{®}, such as 13 or 19 mm thick Armaflex^{®}. The coupling element is substantially circular, having an inner diameter 14 (2*radius) and an outer diameter 15. The outer diameter 15 plus two times a thickness of the insulation material is equal to an outer total diameter 17. The first cylindrical like, vertical flat element 11 and the at least one substantially flat element 12 are connected at an angle of about 90°. The cutting may preferably be performed at an angle of 45°. As such, two or more parts can be adhered well.

In figure 4 a cross section of coupling element is shown. Therein a first flat (horizontal) element 12, positioned on top (or likewise on the bottom) of a 3-dimensional coupling element, is adhered to a vertical flat element 11, forming (part of the) side insulation of the coupling element. Further an incision 13 is provided. The insulation can be made of Armaflex^{®}, such as 13 or 19 mm thick Armaflex^{®}. The coupling element is somewhat irregular, having an inner diameter 14 (2*radius), an outer diameter 15, a somewhat more broadened horizontal section 16, and a somewhat less broadened vertical section 17. Such may be due to the inherent structure of the coupling element itself. The ratio of the length of section 16 and length of section 17 is typically from 1-3. Figures 3 and 4 effectively show half of a 3-dimensiional structure intended for insulating a coupling element.

Figures 5-8 show a T-section, a rectangular section, a rectangular section comprising a valve, and a bend section, respectively. Therein at least two tube sections 10 are shown, at least one coupler 20 (figures 5, 6a, 7a, 8a) or likewise a weld (figures 6b, 7b and 8b, fig. 5 may have a not shown weld equivalent), and a butterfly valve 30. The couplers may relate to groove couplers, such as NW125 groove couplers.

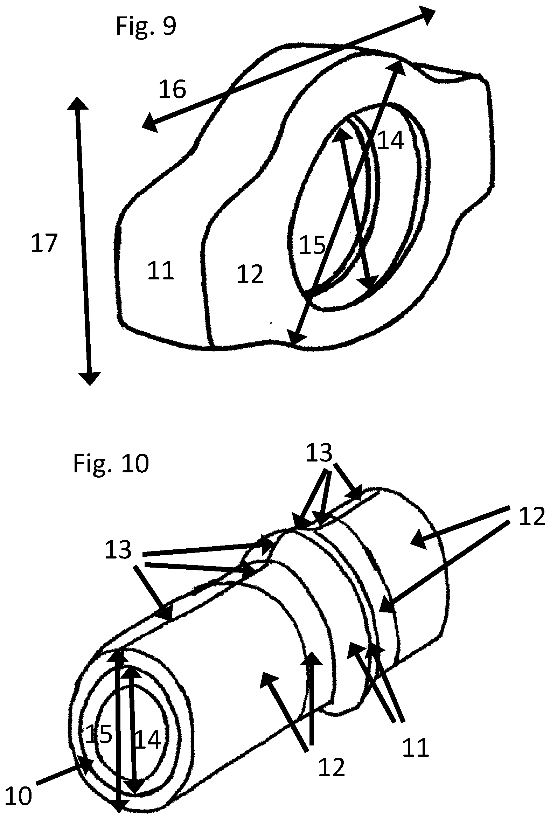

Figure 9 shows an insulation element for a coupling element.

Figure 8 shows an example of an insulated tube section comprising a coupling element. For both figures 9 and 10 a superior appearance is achieved, having smooth edges, good insulation, good adherence, etc.

Fig. 10 shows an exemplary assembly, or part thereof, with an air permeable mat A, a vacuum table B, and a vacuum table zone C. In the present method a cobot (collaborative robot) is used. As a result, the following capabilities have been realised:
- Automatic material positioning, eliminating errors in manual alignment.
- Dynamic adjustment of cutting parameters, with the cobot processing real-time feedback to optimise cutting quality.
- Reduced operator intervention, leading to higher consistency and lower production losses. Our method offers significant technical advantages:
- Higher precision thanks to CNC control.
- No thermal deformation due to absence of heating.
- Real-time adjustment of cutting angles, which increases flexibility and efficiency.
- Suitable for various thicknesses and material types, without mechanical stress.
- Oscillating tangential blade ensures extremely sharp cuts and minimises material wastage.

In general, the present invention offers significant improvements over known techniques, such as Elimination of thermal deformation, High accuracy and material savings, Capable of thermal insulation without damage to material properties, and Oscillating cutting system increases versatility and precision. Such is amongst other provided by n advanced cutting system with an oscillating tangential blade for cutting elastomeric materials, Variable cutting angles (5° - 60°) and depth control, adjustable during cutting, No use of heated cutting tip, avoiding thermal deformation, and Precision machining of thermal insulation materials without mechanical stress. The present invention therefore relates to an innovative process for cutting elastomeric materials for thermal insulation. The invention introduces an advanced cutting system with an oscillating (tangential) blade, which allows cutting complex two-dimensional insulation shapes with high precision and without thermal deformation. Precise results are achieved through advanced technology and quality components.

The present assembly uses a vacuum table, a collaborative robot (cobot) and an oscillating blade to produce precise and efficient cuts according to predefined shapes and angles. This process is optimised for maximum precision and material utilisation. Typical specifications of the Elastomeric Material are a thickness: Variable between 10 mm and 25 mm, a width of 1 metre, a length of between 8 metres and 10 metres, and the material is placed on a vacuum table for stabilisation during the cutting process. The vacuum table is supplied by EAS GmbH of Germany and has the following features: - Dimensions: Suitable for elastomer rolls up to 1 metre wide and 10 metres long. - Suction: Adjustable vacuum pressure for optimal fixation of materials with variable thicknesses. - Suction system: Integrated dust and particle removal to maintain cutting quality. - Automatic pressure control: Adjusts suction force based on the thickness and structure of the elastomer. - Seamless integration: Compatible with the UR10E cobot and oscillating cutting system. The shapes to be cut are pre-programmed in specialised software. - Each shape contains predefined cutting angles varying between 10° and 90°. - For each shape, it is specified which edges are to be cut at a 45-degree angle. - Nesting functionality optimises material utilisation through efficient placement of cutting shapes. - Ability to refine cutting parameters manually for special applications.

The cobot is a UR10E collaborative robotic arm, supplied by Elektrolas BV.
- Features of the UR10E:
   o Payload: 12.5 kg.
   o Reach: 1300 mm.
   ∘ Integrated force sensors for precise cutting pressure control.
   ∘ Easy programming via the UR Teach Pendant and URCaps software.
- The cobot is equipped with an oscillating blade supplied by EAS GmbH, with variable cutting depth depending on the thickness and properties of the elastomer.
- Cutting angles and pressure settings are dynamically adjusted via the software, ensuring high cutting quality and minimal material wastage.

The assembly is automated in that 1. Placement of the elastomer on the vacuum table: automatic detection of material thickness and positioning.
2. Selection of the desired cutting shape and quantity via the software interface.
3. Automatic positioning and nesting within the available surface.
4. Execution of the cutting process by the UR10E cobot with oscillating blade.
5. Extraction of cutting waste through the table's integrated vacuum system.
6. Quality control and inspection by sensors monitoring cutting precision and material finish.

This provides - Full automation of the cutting process without manual alignment.
- Optimal material utilisation through intelligent nesting software.
- Precision cuts with variable angles for complex geometries.
- High repeatability and quality assurance through advanced cobot-controlled technology.
- Expandable system for future applications and integration with additional robotic processes.

To the person skilled in art it is clear that the above given embodiments of the method represent only a few of the many possible variations in which method according to the invention may be executed. Therefore, the embodiments given here must be understood as an elucidation to the appended claims without limiting the scope of the invention. Within the protective scope numerous variations are conceivable.

## Claims

1. Method of forming an elastomeric foam element having a thickness and a pre-designed 2-dimensional shape, for thermal insulation on a 3-dimensional structure, the method comprising
- providing a flat panel (3) of elastomeric material with a flat panel thickness (t) on a support (2), wherein the flat panel width (w) and the flat panel length (1) are both at least as large as the 2-dimensional shape width and the 2-dimensional shape length, respectively, wherein the support is configured to stabilize the flat panel of elastomeric material during cutting, and preferably to fix the flat panel in place,
- forming the elastomeric element out of the flat panel of elastomeric material, wherein forming is by a cutter, wherein the cutter is selected from an ultrasonic cutter and an oscillating tangential cutter, in particular wherein the cutter comprises a blade, and
- therewith obtaining the elastomeric element having the pre-designed 2 dimensional shape, wherein the forming by the cutter is a robot-controlled cutter (4), wherein cutting is at a predetermined position on the flat panel and under a predetermined angle of the cutter,
in particular wherein the flat panel of elastomeric material has a thickness of 0.5 - 5 cm.

2. The method according to claim 1, initially comprising
- obtaining the 2-dimensional shape and thickness of the elastomeric element, in particular by at least one of designing of the 2-dimensional shape, and obtaining a representation of the 2-dimensional shape, in view of the 3-dimensionale structure, more in particular a digital representation, and
- providing instructions to the robot-controlled cutter to form the elastomeric element by cutting.

3. The method according to any of claims 1-2, wherein the support further comprises at least one air permeable mat configured for receiving part of the tip of the cutter, when a stroke of tip when cutting exceeds the thickness of the flat panel, and/or
Wherein the support is divided into support sections (C), and/or
wherein the support comprises
- a bottom element (5), and
- one or more spacer elements (6) attached to one side of the bottom element, for supporting the flat panel (3) of elastomeric material, the one or more spacer elements thereby forming an open space (s) between the bottom element and the flat panel of elastomeric material, and
- one or more wall elements (7) attached to the bottom element, the one or more wall elements enclosing the open space between the bottom element and the flat panel of elastomeric material and the one or more spacer elements,
wherein the bottom element, the one or more wall elements and the flat panel of elastomeric material form a closed container (8), enclosing the open space and the spacer elements within the open space, and
wherein the flat panel of elastomeric material has the same surface size as the surface enclosed by the inner side of the one or more wall elements, and/or
wherein a suction force (f) is applied to the inside of the container, by providing an under pressure to the flat panel, such as an under pressure of 1-1000 Pa, in particular 10-100 Pa thereby pulling the flat panel against the one or more spacer elements, and obtaining a stabilized configuration of the flat panel of elastomeric material during cutting.

4. Method according to any of claims 1-3, wherein the forming is performed by at least one of a constant angle of the cutter with respect to the elastomeric element, and a variable angle of the cutter with respect to the elastomeric element, in particular wherein the angle of the cutter is selected from perpendicular, 85-95°, 40-50°, 25-35° and 55-65°, with respect to a surface of the flat panel.

5. The method according to any of claims 1-4, wherein the angle of the cutter is varied by rotating the cutter to the according angle, and/or wherein the angle of the cutter is varied by rotating the robot to the according angle,
in particular wherein the angle of the cutter is dynamically adjusted during cutting in view of the pre-designed 2-dimensional shape with the panel thickness.

6. The method according to any of claims 1-5, further comprising
- obtaining a digital representation of the 3-dimensional structure to be insulated, the 3-dimensional structure comprising at least two individual tube sections and an outward extending connecting section, wherein the 3-dimensional structure in particular comprises elements of ductwork and piping, such as pipe-couplings, passages through walls and floors, bends, bifurcations, sensors, T-junctions, controllers, closures, vents, locking wheels, supports, suspensions, (butterfly)valves, flanges and branches, and in particular wherein the outward extending connecting section is selected from at least one of a sensor, a controller, and a closure,
- dividing the 3-dimensional structure into a multitude of 3-dimensional sub-structures,
- identifying to be-insulated sub-structures and sub-structures that need no insulation, and,
- for each to be-insulated sub-structure providing at least one pre-designed 2 dimensional shape for insulating said sub-structure, in particular
further comprising providing each of the multitude of 3-dimensional sub-structures with a unique sub-structure identifier, in particular each of the to-be-insulated sub-structures, and providing each of the pre-designed 2-dimensional shape for insulating said sub-structure with a unique 2-dimensional shape identifier, in particular a with the unique sub-structure identifier corresponding unique 2-dimensional shape identifier, more in particular further comprising providing the at least one pre-designed 2-dimensional shape for each to be-insulated sub-structure to the controller, and
instructing the robot-controlled cutter to cut said at least one pre-designed 2-dimensional shape, in particular wherein a remainder of the flat panel after providing the at least one pre-designed 2-dimensional shape for each of the multitude of 3-dimensional sub-structures to be-insulated is minimized, more in particular minimized for all flat panels to be used for providing the multitude of 3-dimensional sub-structures.

7. The method of claim 6, further comprising sorting said at least one pre-designed 2-dimensional shape per sub-structure, in particular
further comprising applying the at least one pre-designed 2-dimensional shape per sub-structure to said sub-structure, in particular by an adhesive.

8. The method of any of claims 1-7, further comprising
Positioning the flat panel on the support, and/or
Aligning the flat panel on the support, in particular aligning the flat panel in view of at least one corner of the support and/or at least one side of the support, therewith providing an aligned coordination system of the flat panel with respect to the position of the support.

9. The method of any of claims 1-8, further comprising
Selecting a cutter with a cutting length substantially similar to a thickness of the flat panel, Adjusting a height of the cutter with respect to the support such that a cutting depth of the cutter does not exceed the thickness of the flat panel,

10. A multitude of elastomeric foam elements having a pre-designed 2-dimensional shape, for thermal insulation on a 3-dimensional structure, obtainable by the method according to any of claims 1-9, wherein said multitude of elastomeric foam elements is for thermal insulation on said 3-dimensional structure, in particular of a multitude of 3-dimensional sub-structures, and wherein for each to be-insulated sub-structure at least one pre-designed 2 dimensional shape for insulating said sub-structure is provided, in particular wherein the elastomeric material is a foam comprising flexible and closed-cell structures, such as rubber foams based on NBR or EPDM rubber, and/or.
wherein the elastomeric element has an inbuilt water vapor barrier, and/or
wherein the elastomeric element is a dust and fiber free material, and/or
wherein the elastomeric element has a closed cell structure, in particular an interconnected closed cell structure.

11. Assembly (1) for forming an elastomeric foam element having a pre-designed 2-dimensional shape, for thermal insulation on a 3-dimensional structure, the assembly comprising
- a support (2) for receiving a flat panel of elastomeric material, wherein the support is configured to stabilize the flat panel of elastomeric material during cutting, and preferably to fix the flat panel in place, wherein the support further comprises at least one air permeable mat configured for receiving part of the tip of the cutter, when a stroke of tip when cutting exceeds the thickness of the flat panel, in particular wherein the support is divided into support sections (C),
and
- a robot-controlled cutter (4), configured to cut a 2-dimentsional shape out of the flat panel of elastomeric material, at a predetermined position and at a predetermined angle, wherein the predetermined angle of the cutter is adjustable before and during cutting, in particular wherein the robot-controlled cutter is selected from a cutter comprising an adjustable robot arm with a cutter, from a robot arm with an adjustable cutter, and from a combination thereof.

12. The assembly according to claim 11, wherein the support comprises
- a bottom element (5), and
- one or more spacer elements (6) attached to one side of the bottom element, for supporting the flat panel (3) of elastomeric material, the one or more spacer elements thereby forming an open space (s) between the bottom element and the flat panel of elastomeric material, and
- one or more wall elements (7) attached to the bottom element, the one or more wall elements enclosing the open space between the bottom element and the flat panel of elastomeric material and the one or more spacer elements,
wherein the bottom element, the one or more wall elements and the flat panel of elastomeric material form a closed container (8), enclosing the open space and the spacer elements within the open space, and
wherein the flat panel of elastomeric material has the same surface size as the surface enclosed by the inner side of the one or more wall elements, and
wherein a suction force (f) is applied to the inside of the container, thereby pulling the flat panel against the one or more spacer elements, and obtaining a stabilized configuration of the flat panel of elastomeric material during cutting, wherein a suction force (f) is applied, by providing an under pressure to the flat panel, such as an under pressure of 1-1000 Pa, in particular 10-100 Pa thereby pulling the flat panel against the one or more spacer elements, and obtaining a stabilized configuration of the flat panel of elastomeric material during cutting, in particular
wherein the assembly further comprises a digital operating system (9), for digital processing of designing the 2-dimensional shape of the elastomeric element, and for instructing the robot-controlled cutter (4), and for forming the elastomeric element.

13. Use of the method according to any of claims 1-9 in thermal insulation of a 3-dimensional structure, the 3-dimensional structure comprising at least two individual tube sections and an outward extending connecting section, wherein the 3-dimensional structure in particular comprises elements of ductwork and piping, such as pipe-couplings, passages through walls and floors, bends, bifurcations, sensors, T-junctions, controllers, closures, vents, locking wheels, supports, suspensions, (butterfly)valves, flanges and branches, and in particular wherein the outward extending connecting section is selected from at least one of a sensor, a controller, and a closure, wherein the 3-dimensional structure is divided into a multitude of 3-dimensional sub-structures, wherein for each to be-insulated sub-structure at least one pre-designed 2 dimensional shape for insulating said sub-structure is provided, and wherein for each to be-insulated sub-structure at least one pre-designed 2 dimensional shape for insulating said sub-structure is provided.

14. A computer program, when loaded and executed on a computer, comprising instructions to form an elastomeric foam element having a thickness and a pre-designed 2-dimensional shape, for thermal insulation on a 3-dimensional structure, comprising
- providing a flat panel of elastomeric material with a flat panel thickness on a support, wherein the flat panel width and the flat panel length are both at least as large as the 2-dimensional shape width and the 2-dimensional shape length, respectively,
- forming the elastomeric element out of the flat panel of elastomeric material, carried out by a cutter, and
- therewith obtaining the elastomeric element having the pre-designed 2 dimensional shape, wherein the forming by the cutter is performed by a robot-controlled cutter, at a predetermined position and at a predetermined angle, in particular providing instruction to adjust the predetermined angle of the cutter before and during cutting.

15. The computer program according to claim 14, further comprising a multitude of representations of 2-dimensional shapes, wherein said multitude of representations is projected on a series of flat panels such that a remainder of flat panel material of said flat panels is minimized.
